(19) Europäisches Patentamt
European Patent Office
Office européen des brevets

(11) **EP 4 398 683 A2**

(12) **EUROPÄISCHE PATENTANMELDUNG**

(43) Veröffentlichungstag:
**10.07.2024 Patentblatt 2024/28**

(21) Anmeldenummer: **24171168.8**

(22) Anmeldetag: **19.07.2018**

(51) Internationale Patentklassifikation (IPC):
**H05B 6/70** *(2006.01)*

(52) Gemeinsame Patentklassifikation (CPC):
**H05B 6/705;** Y02B 40/00

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.08.2017 DE 102017214751**

(62) Dokumentnummer(n) der früheren Anmeldung(en) nach Art. 76 EPÜ:
**18743016.0 / 3 673 711**

(71) Anmelder: **BSH Hausgeräte GmbH**
**81739 München (DE)**

(72) Erfinder:
• **Sterz, Sebastian**
**86845 Großaitingen (DE)**
• **Rigorth, Kerstin**
**84453 Mühldorf (DE)**
• **Vogt, Matthias**
**89423 Gundelfingen Donau (DE)**

Bemerkungen:
Diese Anmeldung ist am 18.04.2024 als Teilanmeldung zu der unter INID-Code 62 erwähnten Anmeldung eingereicht worden.

(54) **BETREIBEN EINES MIKROWELLEN-HAUSHALTSGERÄTS**

(57) Ein Verfahren dient zum Betreiben eines Mikrowellen-Haushaltsgeräts, bei dem ein Behandlungsraum entsprechend einem aktuellen Parametervektor mit Mikrowellen beaufschlagt wird und ein zugehöriger Mikrowellenmesswert bestimmt wird, ein Beschleunigungsvektor komponentenweise auf Basis einer Differenz des für den aktuellen Parametervektor bestimmten Mikrowellenmesswerts und eines Mikrowellenmesswerts für einen Parametervektor, dessen jeweilige Komponente modifiziert worden ist, berechnet wird, ein Geschwindigkeitsvektor modifiziert wird, indem der Beschleunigungsvektor zu einem aktuellen Geschwindigkeitsvektor hinzuaddiert wird und der modifizierte Geschwindigkeitsvektor als neuer aktueller Geschwindigkeitsvektor festgelegt wird, ein weiterer Parametervektor bestimmt wird, indem der aktuelle Parametervektor mittels des neuen aktuellen Geschwindigkeitsvektors modifiziert wird, und der weitere Parametervektor als neuer aktueller Parametervektor festgelegt wird und die obigen Schritte so lange wiederholt werden, bis mindestens eine vorgegebene Abbruchbedingung erfüllt wird, wobei zu Beginn des Verfahrens ein initialer Parametervektor und ein initialer Geschwindigkeitsvektor vorgegeben werden. Die Erfindung ist insbesondere vorteilhaft anwendbar auf eigenständige Mikrowellen-Gargeräte oder auf Mikrowellen-Kombinationsgeräte, z.B. auf einen Backofen mit Mikrowellenfunktion.

Fig.1

EP 4 398 683 A2

**Beschreibung**

Die Erfindung betrifft ein Verfahren zum Betreiben eines Mikrowellen-Haushaltsgeräts mit mindestens einer Mikrowellenquelle, mindestens einer Mikrowellenantenne zum Einstrahlen von Mikrowellen in einen Behandlungsraum und einer Steuereinrichtung zum Steuern des Mikrowellen-Haushaltsgeräts anhand von Mikrowellenparametern, wobei bei dem Verfahren der Behandlungsraum mit mehreren quantisierten Mikrowellenparametern mit Mikrowellen beaufschlagt wird und ein zugehöriger Mikrowellenmesswert bestimmt wird. Die Erfindung betrifft auch ein entsprechend eingerichtetes Mikrowellen-Haushaltsgerät. Die Erfindung ist insbesondere vorteilhaft anwendbar auf eigenständige Mikrowellen-Gargeräte oder auf Mikrowellen-Kombinationsgeräte, z.B. auf einen Backofen mit Mikrowellenfunktion.

Das Aufheizen von Lebensmitteln mit Mikrowellen in einem auch als Garraum bezeichneten Behandlungsraum eines Mikrowellen-Gargeräts sollte möglichst gleichmäßig und mit hohem Wirkungsgrad erfolgen. Über eine Variation der Mikrowellenparameter wie Frequenz, Amplitude und Phase der eingestrahlten Mikrowellen kann eine Änderung einer Feldverteilung der Mikrowellen im Garraum bewirkt werden, die bei geeigneter Wahl der Mikrowellenparameter die geforderten Eigenschaften besitzen.

Eine Variation von Mikrowellenparametern ist grundsätzlich bekannt. Dabei wird angenommen, dass ein mittels Mikrowellenstrahlung bewirkter idealer Garvorgang durch das Messen und Korrelieren der über ein Mikrowellen-Antennensystem in den Garraum eingebrachten Mikrowellen-Leistung und der über den Garraum an das Antennensystem zurückgestrahlten Leistung bestimmt werden kann. Dazu wird ein Absorptionsverhältnis AV eingeführt, das für ein Antennensystem mit n Antennen oder Kanälen definiert ist als:

$$AV = \frac{\sum_1^n P_{fwd}(n) - \sum_1^n P_{ref}(n)}{\sum_1^n P_{fwd}(n)}$$

Dabei bezeichnet $P_{fwd}(n)$ eine eingebrachte ("forward") Mikrowellenleistung und $P_{ref}(n)$ eine reflektierte Mikrowellenleistung des jeweiligen Kanals. Die reflektierte Mikrowellenleistung $P_{ref}(n)$ kann sich aus der intrinsischen Reflexion dieses Kanals in dem Garraum und einer Übertragung von Mikrowellenleistung aus anderen Kanälen zusammensetzen.

Das Absorptionsverhältnis AV ist im Allgemeinen abhängig von der Wahl eines m-komponentigen Parametertupels oder Parametervektors **k**

$$\boldsymbol{k} = \begin{pmatrix} k_1(\alpha) \\ k_2(\beta) \\ \vdots \\ k_i(\iota) \\ \vdots \\ k_m(\omega) \end{pmatrix}$$

von m Mikrowellenparametern $k_i$ mit i = {1,..., m}, wobei die Mikrowellenparameter beispielsweise Frequenz, Phase und/oder Amplitude umfassen können und als Regelparameter einstellbar sind. Auch nichtelektrische Größen, wie eine (Winkel-)Position eines mechanischen Modenrührers können als Mikrowellenparameter bzw. Vektorkomponenten verwendet werden. Alle Mikrowellenparameter $k_i$ sind üblicherweise quantisiert und können insbesondere einen Minimalwert und/oder einen Maximalwert aufweisen. So kann der erste Mikrowellenparameter $k_1$ einer Mikrowellenfrequenz entsprechen, die beispielsweise Werte $\alpha$ aus dem Wertebereich [2400 MHz, 2401 MHz,...] annehmen kann. Der Wertebereich weist also Werte auf, die eine Schrittweite von 1 MHz aufweisen bzw. die mit einer Schrittweite von 1 Hz "quantisiert" sind.

WO 2011/058538 A1 scannt einen m-dimensionalen Parameterraum ab und führt dem Gargut dann bei geeigneten Parametervektoren Energie zu. WO 2011/058538 A1 offenbart dazu eine Vorrichtung zum Anlegen von elektromagnetischer Energie an eine Last. Die Vorrichtung weist mindestens einen Prozessor auf, der so konfiguriert ist, dass er Informationen empfängt, welche einer dissipierten Energie für jedes einer Vielzahl von Modulationsraumelementen entspricht und eine Vielzahl von Modulationsraumelementen in mindestens zwei Teilmengen gruppiert, und zwar auf der Grundlage der erhaltenen Informationen bezüglich der dissipierten Energie. Der Prozessor kann auch so konfiguriert sein, dass er ein Stromversorgungsprotokoll mit jeder der mindestens zwei Teilmengen verknüpft, wobei das Leistungsübertragungsprotokoll sich zwischen den zwei Teilmengen unterscheidet und die Energie, die an die Last angelegt wird, in Übereinstimmung mit jedem Leistungsübertragungsprotokoll regelt. In WO 2011058538 A1 wird so eine homogene Erwärmung bei einem niedrigen Wert von AV erzielt. Ein hoher Teil der eingebrachten Mikrowellen-Leistung wird wieder in die Quelle reflektiert, und es finden sich keine Hot-Spots in dem Gargut, die nur eine punktuelle Erhitzung zur Folge hätten. WO 2011058538 A1 überprüft einen Parameterraum einmal komplett und kann Änderungen, wie sie etwa durch Garprozesse hervorgerufen werden, nicht mehr folgen.

DE 10 2014 200 355 A1 betrifft ein Verfahren und eine Vorrichtung zum Aufheizen eines Mediums mit Mikrowellen in einem Hohlraum eines Mikrowellengerätes, der mit metallisch leitfähigen Wänden im Wesentlichen umschlossen ist, wobei zur Homogenisierung des Feldes bzw. zur Vermeidung von Hot-Spots eine Variation der Mikrowellenparameter, wie Frequenz, Amplitude und/ oder Phase, sowie weiterer Parameter vorgenommen und für jeden Parametersatz ein Anteil der absorbierten Leistung bestimmt wird, wobei eine homogene Erwärmung des zu erhitzenden Mediums erreicht wird, wenn bevorzugt bei Parametersätzen Leistung in den Hohlraum abgestrahlt wird, die einem niedrigen Absorptionsverhältnis AV zugeordnet sind, wobei das Absorptionsverhältnis AV aus dem Verhältnis aus der Differenz von eingestrahlter und empfangener Leistung und der eingestrahlten Leistung gebildet wird. Es ist dazu vorgesehen, dass mit einem Optimierungsalgorithmus zunächst eine Umgebung eines initialen Parametervektors als Startlösung abgesucht und in Richtung des Parametervektors weitergegangen wird, der in der untersuchten Umgebung zum kleinsten Absorptionsverhältnis führt, wobei danach die Umgebung dieses neuen Parametervektors untersucht und wieder ein Schritt in Richtung des benachbarten Parametervektors unternommen wird, der zu einem kleineren Absorptionsverhältnis AV führt. Das in DE 10 2014 200 355 A1 offenbarte Verfahren entspricht einem Downhill-Simplex-Verfahren. Diese Prozedur wird iterativ bis zum Auffinden eines minimalen Absorptionsverhältnis AV durchgeführt. An diesem Punkt wird so lange Mikrowellenleistung eingebracht, bis das Absorptionsverhältnis AV merklich steigt. Dann beginnt die Prozedur von neuem. Auch mit DE 10 2014 200 355 A1 wird also eine homogene Erwärmung bei einem niedrigen Wert von AV erzielt. Ein hoher Teil der eingebrachten Leistung wird auch hier wieder in die Quelle reflektiert und es finden sich daher keine Hot-Spots im Gargut, die nur eine punktuelle Erhitzung zur Folge hätten. DE 10 2014 200 355 A1 ist ebenfalls statisch und muss erst einen geeigneten Parametersatz bzw. Parametervektor finden, bevor der Garvorgang beginnt.

US 9 265 097 B2 offenbart ein Verfahren zur Verarbeitung eines Objekts und umfasst das Erwärmen des Objekts durch Anwenden von Funkfrequenz (RF)-Energie, das Überwachen eines Wertes, der sich auf eine Absorptionsrate der RF-Energie durch das Objekt während des Erhitzens bezieht, und Anpassen der RF-Energie in Übereinstimmung mit Änderungen in einer Zeitableitung des überwachten Werts. Es wird hier also eine zeitliche Ableitung der RF-Reflexion beobachtet.

Es ist die **Aufgabe** der vorliegenden Erfindung, die Nachteile des Standes der Technik zumindest teilweise zu überwinden und insbesondere eine verbesserte Möglichkeit zum Erwärmen von Lebensmitteln durch Mikrowellen bereitzustellen. Es ist insbesondere eine Aufgabe, eine Möglichkeit zum Erwärmen von Lebensmitteln durch Mikrowellen bereitzustellen, die sich auf Änderungen der zu erhitzenden Lebensmittel einstellen kann. Es ist insbesondere noch eine Aufgabe, eine Möglichkeit zum Erwärmen von Lebensmitteln durch Mikrowellen bereitzustellen, die schneller, gleichmäßiger und/oder effizienter arbeitet.

Diese Aufgabe wird gemäß den Merkmalen der unabhängigen Ansprüche gelöst. Vorteilhafte Ausführungsformen sind Gegenstand der abhängigen Ansprüche, der Beschreibung und der Zeichnungen.

Die Aufgabe wird gelöst durch ein Verfahren zum Betreiben eines Mikrowellen-Haushaltsgeräts mit mindestens einer Mikrowellenquelle zum Erzeugen von Mikrowellen, mindestens einer Mikrowellenantenne zum Einstrahlen der Mikrowellen in einen Behandlungsraum und einer Steuereinrichtung zum Steuern des Mikrowellen-Haushaltsgeräts anhand von m jeweils quantisierten Mikrowellenparametern, bei dem (a) der Behandlungsraum entsprechend einem aktuellen Parametervektor **k** mit Mikrowellen beaufschlagt wird und ein zugehöriger Mikrowellenmesswert bestimmt wird, (b) ein erster Vektor **a** (im Folgenden ohne Beschränkung der Allgemeinheit als "Beschleunigungsvektor" bezeichnet) komponentenweise auf Basis einer Differenz des für den aktuellen Parametervektor **k** bestimmten Mikrowellenmesswerts und eines Mikrowellenmesswerts für einen Parametervektor, dessen jeweilige Komponente modifiziert worden ist, berechnet wird, (c) ein m-komponentiger zweiter Vektor **v** (im Folgenden ohne Beschränkung der Allgemeinheit als "Geschwindigkeitsvektor" bezeichnet) modifiziert wird, indem der Beschleunigungsvektor **a** zu einem aktuellen Geschwindigkeitsvektor **v** hinzuaddiert wird und der modifizierte Geschwindigkeitsvektor **v'** als neuer aktueller Geschwindigkeitsvektor festgelegt wird, (d) ein weiterer Parametervektor **k'** bestimmt wird, indem der aktuelle Parametervektor **k** mittels des neuen aktuellen Geschwindigkeitsvektors **v'** modifiziert wird, und der weitere Parametervektor **k'** als neuer aktueller Parametervektor festgelegt wird und (e) die Schritte (a) bis (d) so lange wiederholt werden, bis mindestens eine vorgegebene Abbruchbedingung erfüllt wird. Dieses Verfahren kann auch als "kinetische Wegsuche" bezeichnet werden.

Das Verfahren weist den Vorteil auf, dass eine Trajektorie der Bewegung des Parametervektors gezielt und besonders effektiv zu Bereichen mit zumindest lokal extremen (minimalen oder maximalen) Mikrowellenparametern und damit zu einem homogenen und ggf. effizienten Erwärmen der Lebensmittel bzw. des Garguts führt.

Das Verfahren weist den weiteren Vorteil auf, dass es dynamisch ist und in Echtzeit auf schnelle Veränderungen der Lebensmittel reagieren kann, die durch den Garprozess bedingt sind, z.B. auf Lebensmittel, die auseinanderfallen, zerfließen, durch schnelles Verdampfen ihren Flüssigkeitsgehalt ändern oder auf sonstige Weise eine schnelle Veränderung ihres Reflexionsgrads zeigen. Das in den Behandlungsraum oder Garraum eingebrachte Mikrowellenfeld passt sich an die Veränderungen an, während der Garvorgang weiterläuft. Dazu wird eine vergleichsweise kleine Untermenge des durch die Parametervektoren k aufgespannten Parameterraums oder Potentialraums zur Anpassung der eingebrachten Mikrowellen benötigt. Die nächste Anpassung erfolgt anhand eines folgenden Durchlaufs der Schritte (a) bis (d) und ist daher immer systemaktuell.

Das Verfahren ist vorteilhafterweise dazu in der Lage, Arbeitspunkte bzw. Parametervektoren aufzufinden, die einer besonders hohen Reflexion der Mikrowellen entsprechen. Das dadurch erreichte Vermeiden von Hot-Spots verhindert eine punktuelle Erwärmung des Garguts.

Das Verfahren ist vorteilhafterweise ebenfalls dazu in der Lage, Arbeitspunkte bzw. Parametervektoren aufzufinden, die einer niedrigen Reflexion der Mikrowellen entsprechen. Bei geringer Reflexion wird mehr Leistung in das Gargut übertragen. Dies kann dazu genutzt werden, Lebensmittel bzw. Gargut gleichmäßig zu erwärmen, wenn die Hot-Spots gleichmäßig in dem Lebensmittel verteilt werden. Es ist besonders vorteilhaft, möglichst alle Arbeitspunkte bzw. Parametervektoren mit geringer Reflexion bzw. lokal minimaler Reflexion zu durchlaufen. Diese Variante ermöglicht einen besonders hohen Wirkungsgrad und ergibt eine besonders geringe Komponentenbelastung sowie eine besonders geringe Entwicklung von Abwärme. Es ist eine Weiterbildung davon, dass bei Halbleitersystemen auf eine Schutzeinrichtung (Zirkulator) verzichtet wird, da bei gefundenen Arbeitspunkten mit geringer Reflexion bzw. von Bereichen um diese Punkte keine schädliche Rückkopplung auf den Halbleiter erfolgt.

Das Verfahren weist den weiteren Vorteil auf, dass es sich sehr schnell an die zu behandelnden Lebensmittel anpasst. So sinkt die Arbeitsgeschwindigkeit nur linear mit der Anzahl m der Regelparameter $k_m$, während sich in WO 2011058538A1 die Arbeitsgeschwindigkeit mit der Anzahl m exponentiell erhöht. Auch das Verfahren nach DE 10 2014 200 355 A1 muss für ein vollständiges Abtasten der Umgebung eines Punktes bis zu 3m-1 Messvorgänge pro Iteration durchführen und ist dadurch für höherdimensionale Regelungsaufgaben, d.h. Regelung mit einer Vielzahl von Regelparametern, ebenfalls kaum geeignet.

Das Mikrowellen-Haushaltsgerät kann ein eigenständiges Mikrowellen-Gargerät oder ein Mikrowellen-Kombinationsgerät sein, z.B. ein Backofen mit Mikrowellenfunktion.

Die mindestens eine Mikrowellenquelle kann mindestens ein Magnetron aufweisen. Die mindestens eine Mikrowellenantenne kann eine oder mehrere Mikrowellenantennen oder Kanäle aufweisen. Mehrere Mikrowellenantennen können auch als ein Antennensystem bezeichnet werden. Die mindestens eine Mikrowellenquelle und die mindestens eine Mikrowellenantenne können zusammen auch als Mikrowellsystem bezeichnet werden.

Der Behandlungsraum kann bei einer Ausgestaltung des Mikrowellen-Haushaltsgeräts als Mikrowellen-Gargerät auch als Garraum bezeichnet werden.

Dass die Steuereinrichtung die Einspeisung der Mikrowellen in den Behandlungsraum anhand von m (m >=1) Mikrowellenparametern einstellen oder steuern kann, entspricht der Verwendung von m unterschiedlichen Mikrowellenparametern. Dass die Mikrowellenparameter quantisiert sind, umfasst insbesondere, dass die jeweiligen Werte, welche der Mikrowellenparameter annehmen kann, jeweils schrittweise einstellbar sind. So kann die Mikrowellenfrequenz z.B. die Werte [902 MHz, 903 MHz,..., 928 MHz] und/oder [2400 MHz, 2401 MHz,..., 2500 MHz] annehmen. Die m Mikrowellenparameter entsprechen Vektorkomponenten des Parametervektors **k.**

Der Beschleunigungsvektor **a** ist ein m-komponentiger Vektor

$$a = \begin{pmatrix} a_1 \\ a_2 \\ \vdots \\ a_m \end{pmatrix},$$

dessen Vektorkomponenten $a_i$ auf Basis einer Differenz des für den aktuellen Parametervektor **k** bestimmten Mikrowellenmesswerts MW (**k**) und eines Mikrowellenmesswerts MW (**k**$_{mod}$) für einen komponentenweise modifizierten Parametervektor **k**$_{mod}$, dessen jeweilige Komponente $k_i$ modifiziert worden ist, berechnet wird. Die Komponente $a_i$ kann also modifiziert werden gemäß $a_i$ = MW (**k**) - MW (**k**$_{mod}$) mit

$$k_{mod} = \begin{pmatrix} k_1(\alpha) \\ k_2(\beta) \\ \vdots \\ k_i(\iota + j) \\ \vdots \\ k_m(\omega) \end{pmatrix}$$

wobei nur die zugehörige i-te Komponente dahingehend modifiziert ist, dass sie auf einen anderen Wert zeigt als für den Parametervektor **k.** Dies kann für alle i durchgeführt werden. Die Mikrowellenmesswerte können mittels des Mikrowellen-Haushaltsgeräts auf grundsätzlich bekannte Weise gemessen werden, z.B. mittels an einem Richtkoppler.

Der in Schritt (c) modifizierte m-komponentige Geschwindigkeitsvektor

$$v' = \begin{pmatrix} v'_1 \\ v'_2 \\ \vdots \\ v'_m \end{pmatrix},$$

kann also gemäß

$$v' = v + g \cdot a$$

berechnet werden, wobei **g** allgemein einen Konstantenvektor

$$g = \begin{pmatrix} g_1 \\ g_2 \\ \vdots \\ g_m \end{pmatrix}$$

mit vorgegebenen Konstanten $g_i$ darstellt. Das Produkt ist hier so definiert, dass **g** · **a** selbst wieder ein Vektor mit den Komponenten $g_1 \cdot a_1$, $g_2 \cdot a_2$, usw ist. **g** kann alternativ als eine diagonal besetzte Matrix geschrieben werden. Die Wertedifferenz des Mikrowellenmesswerts MW eines Mikrowellenparameters bestimmt - abhängig von der Wahl von **g** - die Richtung und den Wert, um den der Parametervektor **k** beschleunigt wird.

In Schritt (d) wird abhängig von der jeweiligen Geschwindigkeitskomponente $v_i$ festgelegt, ob, in welche Richtung und ggf. wie stark die Mikrowellenparameter $k_i$ geändert werden.

Auf das Erfüllen einer Abbruchbedingung hin kann mindestens eine Aktion ausgelöst werden.

Die Schritte (a) bis (d) brauchen nicht notwendigerweise in dieser Reihenfolge durchgeführt zu werden. So kann Schritt (c) auch vor Schritt (b) durchgeführt werden. Das Verfahren führt in der Regel zu einem Parametervektor oder Arbeitspunkt, der insbesondere einem lokalen Extremum (Minimum oder Maximum) des Mikrowellenmesswerts in dem Parameterraum entspricht. Der Parametervektor kann an diesem extremen Parametervektor oder Arbeitspunkt verharren oder ihn durchfahren.

Es ist eine Ausgestaltung, dass der Mikrowellenmesswert ein Reflexionsgrad RG der Mikrowellenstrahlung ist. Der Reflexionsgrad RG kann als

$$RG(k) = \frac{\sum_1^n P_{ref}(n)}{\sum_1^n P_{fwd}(n)}$$

definiert werden. Alternativ oder zusätzlich kann das Absorptionsverhältnis

$$AV(k) = \frac{\sum_1^n P_{fwd}(n) - \sum_1^n P_{ref}(n)}{\sum_1^n P_{fwd}(n)}$$

verwendet werden.

Es ist noch eine Ausgestaltung, dass in Schritt (b) die jeweilige Komponente $k_i$ ($l$ + j) des komponentenweise modifizierten Parametervektors **k$_{mod}$** modifiziert wird, indem ein Wert dieser Komponente um eine vorgegebene Schrittweite j geändert wird. Die Schrittweite j kann grundsätzlich beliebig vorgegeben werden. Es ist eine besonders vorteilhafte Weiterbildung, dass der Regelparameter $k_i$ ($l$) in positive Richtung der Rasterung oder Schrittfolge verschoben wird, d.h., ausgehend von der Quantisierungs- oder Rasterposition $l$ auf die Rasterposition t + j mit j > 0 verschoben wird, falls $v_i$ einen positiven Wert annimmt. Weist $v_i$ einen negativen Wert auf, ist es eine Weiterbildung, dass als nächste Rasterposition t - j mit j > 0 gewählt wird. Die Änderung j beträgt vorteilhafterweise betragsmäßig 1, d.h., dass ein benachbarter Wert eingesetzt wird.

Es ist eine weitere Ausgestaltung, dass in Schritt (c) der Geschwindigkeitsvektor v modifiziert wird, indem dem aktuellen Geschwindigkeitsvektor **v** ein Produkt aus dem aktuellen Beschleunigungsvektor **a** und einer vorgegebenen skalaren Beschleunigungskonstanten g hinzuaddiert wird. Es gilt also für den modifizierten Geschwindigkeitsvektor **v'**

$$v' = v + g \cdot a,$$

wobei g nun eine für alle Komponenten $a_i$ gleiche konstante Zahl ist. Das Produkt $g \cdot a$ ist ein Vektor mit den Komponenten $g \cdot a_1$, $g \cdot a_2$, usw. Diese Ausgestaltung ist besonders einfach umsetzbar.

Durch - ggf. auch komponentenweise - Wahl des Vorzeichens des Konstantenvektors **g** oder durch Wahl des Vorzeichens der skalaren Beschleunigung g kann festgelegt werden, ob sich der Parametervektor in Richtung eines lokalen Minimums oder eines lokalen Maximums bewegt. Ist g positiv, so bewegt sich der Parametervektor **k** beispielsweise in Richtung eines Minimums, ist g negativ, wird in Richtung eines Maximums.

Es ist noch eine weitere Ausgestaltung, dass in Schritt (d) der aktuelle Parametervektor **k** modifiziert wird, indem seine Komponenten $k_i$ mittels der zugehörigen Komponenten $v_i$ des aktuellen Geschwindigkeitsvektor **v** modifiziert werden. Insbesondere kann der aktuelle Parametervektor **k** modifiziert werden, indem die Werte seiner Komponenten $k_i$ ausgehend von der aktuellen Position $k_i(\iota)$ gemäß

$$k_i' = k_i(\iota + j) \text{ falls } v_i > 0 \text{ und } k_i' = k_i(\iota - j) \text{ falls } v_i < 0$$

modifiziert werden, verschoben oder versetzt werden. Diese Versetzung wird für alle $i = [1,..., m]$ Komponenten durchgeführt. Diese Ausgestaltung ist besonders einfach realisierbar.

Es ist ferner eine Ausgestaltung, dass Schritt (d) nur durchgeführt wird, wenn ein Betrag des Geschwindigkeitsvektors v einen vorgegebenen Schwellwert erreicht oder überschreitet. So wird ein Auffinden eines Extremwerts des Mikrowellenmesswerts erleichtert, da geringe Differenzen des Mikrowellenmesswerts den Parametervektor nicht mehr beeinflussen. Dies kann auch komponentenweise durchgeführt werden, d.h., dass Schritt (d) für eine Komponente $k_i$ nur durchgeführt wird, wenn ein Betrag $|v_i|$ der entsprechenden Komponente $v_i$ des Geschwindigkeitsvektors v einen vorgegebenen Schwellwert erreicht oder überschreitet.

Es ist besonders vorteilhaft, wenn $j = 1$ gilt.

Es ist noch eine Weiterbildung, dass die Schrittweite j zu einer neuen Position $k_i(\iota \pm j)$ in Relation zu $v_i$ steht, also $j = f(v_i)$ gilt. Diese Bedingung kann komponentenweise und/oder auch auf den ganzen Parametervektor angewandt werden. Es ist noch eine Weiterbildung, dass $j \sim 1/v_i$ gilt. Dies kann den Vorteil ergeben, dass Bereiche des Parameterraums mit niedriger Reflexion langsam durchlaufen werden, während Bereiche hoher Reflexion schnell übersprungen werden, da v oder $v_i$ typischerweise in Bereichen niedriger Reflexion größer ist und in Bereichen hoher Reflexion kleiner ist, falls der Proportionalitätsfaktor g positiv gewählt wird und somit Bereiche geringer Reflexion bevorzugt angesteuert werden sollen. Falls $g < 0$ gewählt wird, werden Bereiche des Parameterraums mit hoher Reflexion langsam durchlaufen werden, während Bereiche mit niedriger Reflexion schnell übersprungen werden.

Es ist auch eine Ausgestaltung, dass in Schritt (c) der Geschwindigkeitsvektor modifiziert wird, indem zusätzlich gegenläufig zu einer Richtung des Geschwindigkeitsvektors ein Faktor ("Reibungsfaktor") f abgezogen wird. Dies kann auch als

$$v' = v + g \cdot a - f$$

geschrieben werden. Der Reibungsfaktor f bewirkt, dass der Betrag der Komponenten des Geschwindigkeitsvektors v verringert wird und dadurch die virtuelle Geschwindigkeit des Parametervektors im Parameterraum zumindest komponentenweise verringert wird. Der Reibungsfaktor f kann für alle Komponenten gleich sein oder kann komponentenweise verschieden sein. Dass der Reibungsfaktor f gegenläufig zu der Richtung des Geschwindigkeitsvektors abgezogen wird, kann umfassen, dass

$$v_i' = v_i - f$$

falls $v_i > 0$ und

$$v_i' = v_i + f$$

falls $v_i < 0$

für $f > 0$ gilt. Diese Ausgestaltung ergibt den Vorteil, dass sich zusätzliche Bereiche in dem Parameterraum mit optimierten Mikrowellenparametern $k_i$ auffinden lassen, da die Bewegungstrajektorie des Parametervektors **k** durch den Reibungsfaktor f zusätzlich gestört und um eine randomisierende Bewegungsgröße erweitert wird.

Es ist außerdem eine Ausgestaltung, dass in Schritt (c) der Geschwindigkeitsvektor v modifiziert wird, indem er in zeitlichen Abständen verstärkt wird. Dies ergibt den Vorteil, dass durch den Reibungsfaktor f verlorene Geschwindigkeit auf die Geschwindigkeitskomponenten $v_i$ zurückgegeben werden kann.

Die Suchstärke des Verfahrens kann durch eine geeignete Wahl der Werte von g und/oder f erheblich erhöht werden. Denn die Bewegung des Parametervektors **k** erhält durch f und die regelmäßige Verstärkung von v eine chaotische oder praktisch chaotische Größe, welche die statistische Suchstärke erheblich erhöht und Wiederholungen bzw. Redundanzen des Durchlaufens in dem Parameterraum vermeidet.

Die Verstärkung kann beispielsweise so umgesetzt sein, dass dann, wenn pro Iteration bzw. Durchlauf der Schritte (a) bis (e) eine Komponente $v_i$ um $j = 1$ verringert wird, alle p Iterationen (z.B. mit $p = 10$) jedes $v_i$ wieder um die Zahl der vorherigen Verringerungen erhöht wird (z.B. solange $|v_i| \gg 0$ ist). Dies kann analog für Erhöhungen von v oder Kombinationen von Erhöhungen und Verringerungen durchgeführt werden, und zwar auch für Werte $j > 1$ usw.

Es ist außerdem eine Weiterbildung, dass in Schritt (c) der Geschwindigkeitsvektor **v** modifiziert wird, indem er in zeitlichen Abständen auf einen Standardwert zurückgesetzt wird, wobei die Richtungsinformation der einzelnen Komponenten $v_i$ erhalten bleiben kann. Das Erhalten der Richtungsinformation ist gleichzusetzen mit einem gleichbleibenden Vorzeichen von $v_i$. Dies ergibt den Vorteil, dass die Durchführung mit besonders geringem Rechenaufwand umgesetzt werden kann.

Es ist eine Weiterbildung, dass die zeitlichen Abstände regelmäßige Abstände sind. Es ist besonders vorteilhaft, wenn die komponentenweise Verstärkung mit einer komponentenweise zufälligen Verteilung versehen ist. Diese Weiterbildung ergibt den Vorteil, dass die Bewegung des Parametervektors im Parameterraum "chaotischer" wird. Denn diese Weiterbildung führt zu einem "Zappeln" und verhindert ein Festfahren auf bestimmten Trajektorien in dem Parameterraum, beispielsweise ein unbegrenztes Hin-und Herschwingen in einer schmalen Potentialsenke, was praktisch zu einer Beibehaltung von Hotspots und damit zu Verbrennungen im Gargut führen kann. Diese Weiterbildung kann z.B. so umgesetzt sein, dass alle q Iterationen (mit z.B. $q = 10$) zwei Geschwindigkeitskomponenten $v_i$ nicht jeweils um $j = 10$ Einheiten, sondern z.B. um $j = 15$ bzw. 5 Einheiten versetzt werden.

Es ist zudem eine Ausgestaltung, dass in Schritt (d) dann, wenn für eine Komponente $k_i$ ein Rand eines Wertebereichs erreicht wird, ein Vorzeichen der zugehörigen Geschwindigkeitskomponente $v_i$ umgekehrt wird. Dies entspricht einer Bewegungsumkehr der Geschwindigkeitskomponente $v_i$ am Rand.

Es ist auch noch eine Ausgestaltung, dass zu Beginn des Verfahrens ein initialer Parametervektor und ein initialer Geschwindigkeitsvektor als aktuelle Vektoren vorgegeben werden. Es ist eine Weiterbildung, dass der initiale Parametervektor und/oder der initiale Geschwindigkeitsvektor zufällig ausgewählt werden. Es ist noch eine Weiterbildung, dass der initiale Parametervektor und/oder der initiale Geschwindigkeitsvektor anhand von Historiendaten ausgewählt werden, z.B. entsprechend einem Vektor eines zuvor durchgeführten Verfahrensablaufs oder einer Position im Parameterraum, deren Umgebung bislang noch nicht durchfahren wurde.

In Schritt (e) kann mit Eintreten mindestens einer Abbruchbedingung mindestens eine Aktion ausgelöst werden.

Es ist zudem noch eine Ausgestaltung, dass in Schritt (e) mit Eintreten mindestens einer Abbruchbedingung das Verfahren mit einem unterschiedlichen initialen Parametervektor und/oder mit einem unterschiedlichen initialen Geschwindigkeitsvektor erneut durchgeführt wird. Dies ergibt den Vorteil, dass ein besonders großer Teil des Parameterraums auf geeignete Positionen des Parametervektors absuchbar ist. Bei dieser Ausgestaltung wird also kein extremer (minimaler oder maximaler) Arbeitspunkt angefahren und dort verblieben, sondern der Parametervektor durchfährt den Parameterraum ohne Unterlass. Insbesondere werden dabei - beruhend in der Natur des Verfahrens - automatisch extreme Arbeitspunkte durchlaufen. Dies ist insbesondere ein statistischer, dynamischer Prozess, der keine Historiendaten benötigt. Diese Ausgestaltung ist besonders vorteilhaft, falls viele homogen verteilte, sich dynamisch ändernde Hotspots erzeugt werden sollen. Dieser Ausgestaltung liegt die überraschende Erkenntnis zugrunde, dass sich der Parametervektor **k** typischerweise weitaus häufiger in einem lokalen Bereich befindet, der ein zu erreichendes Maximum oder Minimum umgibt und ebenfalls hohe bzw. niedrige Werte des Mikrowellenmesswerts ergibt. Bereiche mit zu der Art des Extremums entgegengesetzten (niedrigen bzw. hohen) Werten werden hingegen schnell durchlaufen.

Es ist zudem noch eine Ausgestaltung, dass in Schritt (e) mit Eintreten mindestens einer Abbruchbedingung zwischen einer Minimasuche und einer Maximasuche des Mikrowellenwerts abgewechselt wird. Dies kann mit oder ohne Änderung des initialen Parametervektors und/oder des initialen Geschwindigkeitsvektors durchgeführt werden. Das Wechseln zwischen Minima- und Maximasuche kann abhängig von einem eingestallten oder aktivierten Garprogramm sein.

Es ist außerdem noch eine Ausgestaltung, dass in Schritt (e) mit Eintreten mindestens einer Abbruchbedingung der aktuelle Parametervektor beibehalten wird. Es wird hierbei also ein stabiler Arbeitspunkt beibehalten, z.B. bis zum Ende des Garablaufs. Dies kann besonders vorteilhaft bei kurzen Behandlungsdauern sein.

Es ist noch eine Ausgestaltung, dass die mindestens eine Abbruchbedingung umfasst, dass für eine vorgegebene Zahl durchlaufener Schleifen der Schritte (a) bis (e) der Parametervektor nicht modifiziert wird.

Es ist noch eine Ausgestaltung, dass die mindestens eine Abbruchbedingung umfasst, dass sich für eine vorgegebene Zahl durchlaufener Schleifen der Schritte (a) bis (e) der Mikrowellenmesswert nicht mehr merklich ändert.

Es ist noch eine Ausgestaltung, dass die mindestens eine Abbruchbedingung umfasst, dass Information mindestens eines dedizierten Sensors eine vorgegebene Bedingung erfüllt. So können Infrarotsensoren das Gargut überwachen und bei Feststellen eines Hotspots den Wert für g auf eine negative Zahl stellen (entspricht suche nach Punkten mit max. Reflexion), um die Temperaturen besser gleichzuverteilen.

Es ist noch eine Ausgestaltung, dass die mindestens eine Abbruchbedingung umfasst, dass das Verfahren beendet wird, z.B. indem der zugehörige Garvorgang beendet wird. Dies kann beispielsweise aufgrund eines Erreichens einer voreingestellten Gardauer, einer Beendigung eines Garprogramms, eines Erreichens einer vorgegebenen Garguttemperatur usw. geschehen.

Jedoch sind die Abbruchbedingungen nicht darauf beschränkt.

Die Aufgabe wird auch gelöst durch ein Mikrowellen-Haushaltsgerät mit mindestens einer Mikrowellenquelle, mindestens einer Mikrowellenantenne zum Einstrahlen von Mikrowellen in einen Behandlungsraum und einer Steuereinrichtung zum Steuern des Mikrowellen-Haushaltsgeräts anhand von m quantisierten Mikrowellenparametern, wobei die Steuereinrichtung durch Durchführung des Verfahrens nach einem der vorhergehenden Ansprüche eingerichtet ist. Das Mikrowellen-Haushaltsgerät kann analog zu dem Verfahren ausgebildet werden und weist die gleichen Vorteile auf.

So ist das Mikrowellen-Haushaltsgerät vorteilhafterweise ein Mikrowellen-Gargerät, z.B. ein eigenständiges Mikrowellen-Gargerät oder ein Mikrowellen-Kombinationsgerät, z.B. ein Backofen mit Mikrowellenfunktion.

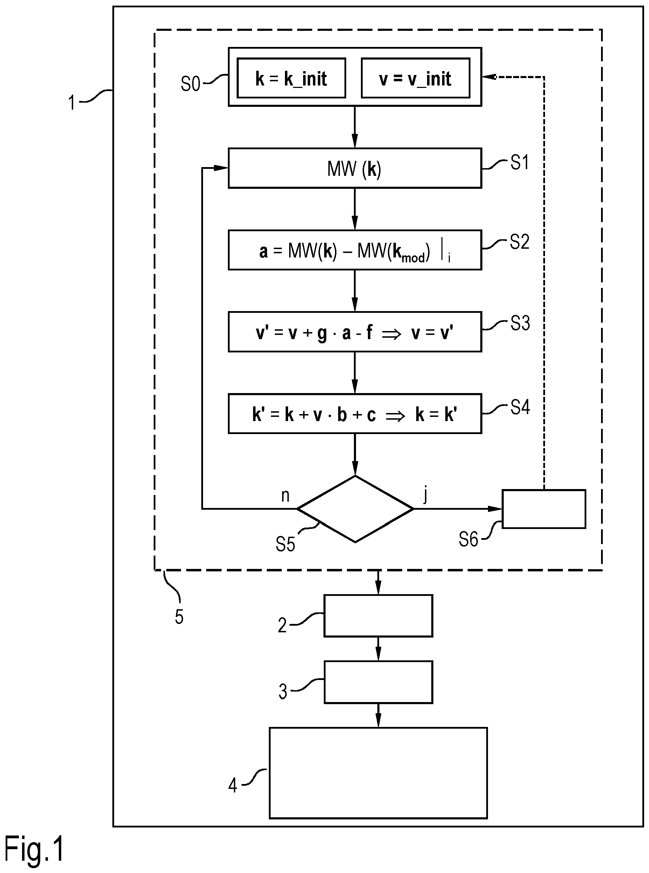

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung eines Ausführungsbeispiels, das im Zusammenhang mit Fig.1 näher erläutert wird.

**Fig.1** zeigt eine Skizze eines Mikrowellen-Haushaltsgeräts in Form eines Mikrowellen-Gargeräts 1 mit mindestens einer Mikrowellenquelle 2 zum Erzeugen von Mikrowellen, mindestens einer Mikrowellenantenne 3 zum Einstrahlen der Mikrowellen in einen Garraum 4 und einer Steuereinrichtung 5 zum Steuern des Mikrowellen-Gargeräts 1 anhand von mehreren quantisierten Mikrowellenparametern. Die Steuereinrichtung 5 ist dazu eingerichtet (z.B. programmiert), ein Verfahren S0 - S6 zum Betreiben eines Mikrowellen-Haushaltsgeräts 1 ablaufen zu lassen.

Bei dem Verfahren S0 - S6 werden zunächst in einem Schritt S0 ein initialer m-dimensionaler Parametervektor **k_init** und ein initialer -dimensionaler Geschwindigkeitsvektor **v_init** als aktueller Parametervektor k und aktueller Geschwindigkeitsvektor v festgelegt.

Folgend werden in einem Schritt S1 der Behandlungsraum 4 entsprechend dem aktuellen Parametervektor k mit Mikrowellen beaufschlagt und ein zugehöriger Mikrowellenmesswert MW (k) insbesondere in Form eines Reflexionsgrads gemessen.

In einem folgenden Schritt S2 wird ein Beschleunigungsvektor a komponentenweise auf Basis einer Differenz des für den aktuellen Parametervektor k bestimmten Mikrowellenmesswerts MW (k) und eines Mikrowellenmesswerts MW ($k_{mid}$) in Form eines Reflexionsgrads für einen Parametervektor $k_{mod}$, dessen jeweilige Komponente $a_i$ modifiziert worden ist, berechnet.

Dann wird in einem Schritt S3 der Geschwindigkeitsvektor v modifiziert, indem der Beschleunigungsvektor a zu einem aktuellen Geschwindigkeitsvektor v hinzuaddiert wird und ein so modifizierter Geschwindigkeitsvektor v' als neuer aktueller Geschwindigkeitsvektor v festgelegt wird. Insbesondere kann dem aktuellen Geschwindigkeitsvektor v ein Produkt aus dem aktuellen Beschleunigungsvektor a und einer vorgegebenen Beschleunigungskonstanten g hinzuaddiert werden. Von dem aktuellen Geschwindigkeitsvektor v kann ein Reibungsfaktor f abgezogen werden, ggf. auch komponentenweise. Der Geschwindigkeitsvektor v kann auch modifiziert werden, indem er in zeitlichen Abständen verstärkt wird.

In einem folgenden Schritt S4 wird ein weiterer Parametervektor k' bestimmt wird, indem der aktuelle Parametervektor k mittels des neuen aktuellen Geschwindigkeitsvektors v modifiziert wird. Der weitere Parametervektor k' wird dann als neuer aktueller Parametervektor k festgelegt. Diese Modifikation kann komponentenweise durchgeführt sein und insbesondere daran geknüpft sein, dass ein Betrag des Geschwindigkeitsvektors oder einer jeweiligen Komponente des Geschwindigkeitsvektors einen vorgegebenen Schwellwert erreicht oder überschreitet. Wenn für eine Komponente des Parametervektors kein Rand eines Wertebereichs erreicht wird, kann ein Vorzeichen der zugehörigen Geschwindigkeitskomponente umgekehrt werden.

Dann wird in einem Schritt S5 überprüft, ob eine vorgegebene Abbruchbedingung erfüllt ist. Ist dies nicht der Fall ("n"), wird zurück zu Schritt S1 verzweigt. Die Abbruchbedingung kann umfassen, dass für eine vorgegebene Zahl durchlaufener Schleifen der Schritte S1 bis S4 der Parametervektor nicht modifiziert wird. Eine Abbruchbedingung kann alternativ oder zusätzlich umfassen, dass sich für eine vorgegebene Zahl durchlaufener Schleifen der Schritte S1 bis S4 der Mikrowellenmesswert MW nicht mehr merklich ändert.

Ist dies der Fall ("j"), wird in Schritt S6 mindestens eine Aktion ausgelöst. Diese Aktion kann ein Verzweigen zu Schritt S0 und ein Wählen eines anderen initiale Parametervektors **k_init** und ein Wählen eines anderen Geschwindigkeitsvektors **v_init** umfassen. Alternativ kann der zuletzt aufgefundene Parametervektor k für die Restdauer des Behandlungsablaufs konstant gehalten werden.

Selbstverständlich ist die vorliegende Erfindung nicht auf das gezeigte Ausführungsbeispiel beschränkt.

Allgemein kann unter "ein", "eine" usw. eine Einzahl oder eine Mehrzahl verstanden werden, insbesondere im Sinne von "mindestens ein" oder "ein oder mehrere" usw., solange dies nicht explizit ausgeschlossen ist, z.B. durch den Ausdruck "genau ein" usw.

Auch kann eine Zahlenangabe genau die angegebene Zahl als auch einen üblichen Toleranzbereich umfassen, solange dies nicht explizit ausgeschlossen ist.

**Bezugszeichenliste**

| | |
|---|---|
| 1 | Mikrowellen-Gargerät |
| 2 | Mikrowellenquelle |
| 3 | Mikrowellenantenne |
| 4 | Garraum |
| 5 | Steuereinrichtung |
| S0 - S6 | Verfahrensschritte |

**Patentansprüche**

1. Verfahren (S0-S6) zum Betreiben eines Mikrowellen-Haushaltsgeräts (1) mit mindestens einer Mikrowellenquelle (2) zum Erzeugen von Mikrowellen, mindestens einer Mikrowellenantenne (3) zum Einstrahlen der Mikrowellen in einen Behandlungsraum (4) und einer Steuereinrichtung (5) zum Steuern des Mikrowellen-Haushaltsgeräts (1) anhand einer Zahl von m quantisierten Mikrowellenparametern, bei dem

   (a) der Behandlungsraum (4) entsprechend einem aktuellen Parametervektor (k), der Werte der m quantisierten Mikrowellenparametern als Komponenten $k_i$ mit $i = \{1,..., m\}$ aufweist, mit Mikrowellen beaufschlagt wird und ein zugehöriger Mikrowellenmesswert (MW) bestimmt wird (S1),
   (b) ein Beschleunigungsvektor (a) komponentenweise auf Basis einer Differenz des für den aktuellen Parametervektor (k) bestimmten Mikrowellenmesswerts (MW) und eines Mikrowellenmesswerts (MW) für einen Parametervektor ($k_{mod}$), dessen jeweilige Komponente modifiziert worden ist, berechnet wird (S2),
   (c) ein Geschwindigkeitsvektor modifiziert wird, indem der Beschleunigungsvektor (a) zu einem aktuellen Geschwindigkeitsvektor (v) hinzuaddiert wird und der modifizierte Geschwindigkeitsvektor (v') als neuer aktueller Geschwindigkeitsvektor (v) festgelegt wird (S3),
   (d) ein weiterer Parametervektor (k') bestimmt wird, indem der aktuelle Parametervektor (k) mittels des neuen aktuellen Geschwindigkeitsvektors (v) modifiziert wird, und der weitere Parametervektor (k') als neuer aktueller Parametervektor (k) festgelegt wird (S4) und
   (e) die Schritte (a) bis (d) so lange wiederholt werden, bis mindestens eine vorgegebene Abbruchbedingung erfüllt wird (S5)

   wobei zu Beginn des Verfahrens ein initialer Parametervektor ($k_{init}$) und ein initialer Geschwindigkeitsvektor ($v_{init}$) vorgegeben werden (S0).

2. Verfahren (S0-S6) nach Anspruch 1, bei dem der Mikrowellenmesswert (MW) ein Reflexionsgrad ist.

3. Verfahren (S0-S6) nach einem der vorhergehenden Ansprüche, bei dem in Schritt (b) die jeweilige Komponente des komponentenweise modifizierten Parametervektors ($k_{mod}$) modifiziert wird, indem ein Wert dieser Komponente um eine vorgegebene Schrittweite geändert wird.

4. Verfahren (S0-S6) nach einem der vorhergehenden Ansprüche, bei dem in Schritt (c) der Geschwindigkeitsvektor (v) modifiziert wird, indem dem aktuellen Geschwindigkeitsvektor (v) ein Produkt aus dem aktuellen Beschleunigungsvektor (a) und einer vorgegebenen Beschleunigungskonstanten (g) hinzuaddiert wird.

5. Verfahren (S0-S6) nach einem der vorhergehenden Ansprüche, bei dem in Schritt (d) der aktuelle Parametervektor (k) modifiziert wird, indem seine Komponenten mittels der zugehörigen Komponenten des aktuellen Geschwindigkeitsvektor (v) modifiziert werden.

6. Verfahren (S0-S6) nach einem der vorhergehenden Ansprüche, bei dem Schritt (d) nur durchgeführt wird, wenn ein Betrag des Geschwindigkeitsvektors (v) oder ein Betrag mindestens einer jeweiligen Komponente des Geschwindigkeitsvektors (v) einen vorgegebenen Schwellwert erreicht oder überschreitet.

7. Verfahren (S0-S6) nach einem der vorhergehenden Ansprüche, bei dem in Schritt (c) der Geschwindigkeitsvektor (v) modifiziert wird, indem zusätzlich gegenläufig zu einer Richtung des Geschwindigkeitsvektors (v) ein Reibungsfaktor (f) abgezogen wird.

8. Verfahren (S0-S6) nach Anspruch 7, bei dem in Schritt (c) der Geschwindigkeitsvektor (v) modifiziert wird, indem der Geschwindigkeitsvektor (v) in zeitlichen Abständen verstärkt wird.

9. Verfahren (S0-S6) nach einem der vorhergehenden Ansprüche, bei dem in Schritt (d) dann, wenn für eine Komponente des Parametervektors (k) ein Rand eines Wertebereichs erreicht wird, ein Vorzeichen der zugehörigen Geschwindigkeitskomponente umgekehrt wird.

10. Verfahren (S0-S6) nach einem der vorhergehenden Ansprüche, bei dem in Schritt (e) mit Eintreten mindestens einer Abbruchbedingung (S5) das Verfahren (S0-S6) mit einem unterschiedlichen initialen Parametervektor ($k_{init}$) und/oder einem unterschiedlichen initialen Geschwindigkeitsvektor ($v_{init}$) erneut durchgeführt wird.

11. Verfahren nach einem der vorhergehenden Ansprüche, bei dem in Schritt (e) mit Eintreten mindestens einer Abbruchbedingung (S5) der aktuelle Parametervektor (k) beibehalten wird.

12. Verfahren nach einem der vorhergehenden Ansprüche, bei dem die mindestens eine Abbruchbedingung aus Schritt (e) umfasst, dass für eine vorgegebene Zahl durchlaufener Schleifen der Schritte (a) bis (e) der Parametervektor (k) nicht modifiziert wird.

13. Verfahren nach einem der vorhergehenden Ansprüche, bei dem die mindestens eine Abbruchbedingung aus Schritt (e) umfasst, dass sich für eine vorgegebene Zahl durchlaufener Schleifen der Schritte (a) bis (e) der Mikrowellenmesswert (MW) nicht mehr merklich ändert.

14. Mikrowellen-Haushaltsgerät (1) mit mindestens einer Mikrowellenquelle (2) zum Erzeugen von Mikrowellen, mindestens einer Mikrowellenantenne (3) zum Einstrahlen der Mikrowellen in einen Behandlungsraum (4) und einer Steuereinrichtung (5) zum Steuern des Mikrowellen-Haushaltsgeräts (1) anhand von m quantisierten Mikrowellenparametern, **dadurch gekennzeichnet, dass** die Steuereinrichtung (5) durch Durchführung des Verfahrens (S0-S6) nach einem der vorhergehenden Ansprüche eingerichtet ist.

Fig.1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2011058538 A1
- DE 102014200355 A1
- US 9265097 B2